(19) Europäisches Patentamt / European Patent Office / Office européen des brevets

(11) **EP 3 767 246 B1**

(12) **EUROPEAN PATENT SPECIFICATION**

(45) Date of publication and mention of the grant of the patent:
**10.08.2022  Bulletin 2022/32**

(21) Application number: **18916952.7**

(22) Date of filing: **24.04.2018**

(51) International Patent Classification (IPC):
**G01D 21/00** $^{(2006.01)}$    **G01C 19/00** $^{(2013.01)}$
**G01P 21/00** $^{(2006.01)}$

(52) Cooperative Patent Classification (CPC):
**G01D 3/08; G01C 21/16; G01C 25/00; G01D 21/00; G01P 21/00; G06F 21/554**

(86) International application number:
**PCT/JP2018/016647**

(87) International publication number:
**WO 2019/207652 (31.10.2019 Gazette 2019/44)**

(54) **ATTACK DETECTION DEVICE, ATTACK DETECTION PROGRAM, AND ATTACK DETECTION METHOD**

ANGRIFFSDETEKTIONSVORRICHTUNG, ANGRIFFSDETEKTIONSPROGRAMM UND ANGRIFFSDETEKTIONSVERFAHREN

DISPOSITIF DE DÉTECTION D'ATTAQUE, PROGRAMME DE DÉTECTION D'ATTAQUE ET PROCÉDÉ DE DÉTECTION D'ATTAQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.01.2021  Bulletin 2021/03**

(73) Proprietor: **Mitsubishi Electric Corporation**
**Tokyo 100-8310 (JP)**

(72) Inventors:
• **NASHIMOTO, Shoei**
**Tokyo 1008310 (JP)**

• **SUZUKI, Daisuke**
**Tokyo 1008310 (JP)**

(74) Representative: **Pfenning, Meinig & Partner mbB Patent- und Rechtsanwälte**
**Theresienhöhe 11a**
**80339 München (DE)**

(56) References cited:
**EP-A1- 3 239 884        WO-A1-2017/141469**
**WO-A1-2018/055748    WO-A1-2018/055748**
**JP-A- 2006 350 707    JP-A- 2012 042 285**
**JP-A- 2015 169 582    US-A1- 2017 264 629**
**US-A1- 2018 004 948    US-B1- 8 957 812**

## Description

## Technical Field

The present invention relates to an attack detection device, an attack detection program, and an attack detection method.

## Background Art

An inclination sensor is often used for attitude measurement or attitude control of an aircraft and heavy equipment. In particular, an inclination sensor called an attitude heading reference system (AHRS) is referred to as an inertial measurement unit. The AHRS is composed of an acceleration sensor, a gyroscope sensor, a magnetic sensor (compass), and a processor. The processor performs signal processing on various types of sensor data and outputs inclination data. Sensors and a module that performs signal processing for the sensors, like this, will be referred to as a sensor module.

As the various sensors constituting the AHRS, micro-electro-mechanical system (MEMS) sensors, which are advantageous in cost and downsizing, are often used. A MEMS sensor has a configuration such that mechanical parts and an electronic circuit are integrated into one unit.

The AHRS calculates an inclination by signal processing based on acceleration data obtained from the acceleration sensor, angular velocity data obtained from the gyroscope sensor, and magnetic data obtained from the magnetic sensor. Signal processing for fusing different types of sensor data and measuring different types of physical information in this way will be referred to as sensor fusion.

Non-Patent Literature 1 and Non-Patent Literature 2 disclose sensor fusion algorithms using the Kalman filter for the AHRS. In the sensor fusion algorithms based on Non-Patent Literature 1 and Non-Patent Literature 2, the same physical quantity is measured by two types of sensors, and the error is corrected by the Kalman filter to derive the correct measurement value. Specifically, the direction of gravity can be known from the acceleration sensor and the gyroscope sensor. The geomagnetic field can be known from the magnetic sensor and the gyroscope sensor. Therefore, by combining both of them, the inclination in world coordinates is calculated.

In measurement and control using a sensor, the reliability of sensor data is directly linked to the reliability of a system. Therefore, an attack on the sensor is a threat. An attack that disguises sensor data in software using malware can be dealt with by existing information security technologies.

On the other hand, an attack that deceives in hardware by emitting a physical signal to the sensor to physically vary the state of the sensor cannot be dealt with only by existing information security technologies. Non-Patent Literature 3 and Non-Patent Literature 4 disclose attack methods that deceive a MEMS gyroscope sensor and a MEMS acceleration sensor, respectively, by ultrasonic waves. An ultrasonic wave attack leverages the fact that a MEMS sensor includes a spring and a weight, and obtains an abnormal sensor output by forcibly resonating the sensor.

Non-Patent Literature 3 discloses, as countermeasure methods, physically shielding the sensor and changing the resonance frequency of the sensor as countermeasures in hardware.

Non-Patent Literature 4 discloses, as a countermeasure method, replacing the parts constituting the sensor with parts that are less susceptible to an ultrasonic attack as a countermeasure in hardware. Furthermore, Non-Patent Literature 4 discloses, as a countermeasure method, changing the sampling interval of the sensor as a countermeasure in software.

EP 3239884 A1 discloses that a threat detection computer may receive the series of current values from threat nodes, generate a set of current feature vectors, execute the threat detection model, and transmit a threat alert signal based on the current feature vectors and at the least one decision boundary.

US 2017/264629 A1 discloses a system comprising function blocks, which are configured to monitor the process data in the process image during each scan cycle, and identify a possible cyberattack based on the process data.

WO 2018/055748 A1 discloses that a signal modulation modulates, by using a modulation signal, an actuator control signal for controlling an actuator. When a measurement signal, indicating a physical state measured by a passive sensor, is received from the passive sensor after a modulated actuator control signal, which is the actuator control signal that has been modulated by the signal modulation unit, is transmitted to the actuator, a correlation calculation unit calculates the correlation between the received measurement signal and the modulation signal used by the signal modulation unit to modulate the actuator control signal.

## Citation List

## Non-Patent Literature

Non-Patent Literature 1: Daniel Roetenberg, Henk J Luinge, Chris TM Baten, and Peter H Veltink. 2005. Compensation of magnetic disturbances improves inertial and magnetic sensing of human body segment orientation. IEEE Transactions on neural systems and rehabilitation engineering 13, 3 (2005), 395-405.
Non-Patent Literature 2: NXP Semiconductors. 2016 AN5023 - Sensor Fusion Kalman Filters.
Non-Patent Literature 3: Son, Yunmok, et al. "Rocking drones with intentional sound noise on gyroscopic sensors." 24th USENIX Security Symposium (USENIX Security 15). 2015.
Non-Patent Literature 4: Timothy Trippel, Ofir Weisse, Wenyuan Xu, Peter Honeyman, and Kevin Fu. 2017. WALNUT: Waging doubt on the integrity of mems accelerometers with acoustic injection attacks. In Security and Privacy (EuroS&P), 2017 IEEE European Symposium on. IEEE, 3-18.

## Summary of Invention

### Technical Problem

The countermeasure methods in hardware disclosed in Non-Patent Literature 3 and Non-Patent Literature 4 require modification to the sensor itself, resulting in increased costs. The method of shielding the sensor may affect other sensors, and may adversely affect measurement performance.

The countermeasure method in software disclosed in Non-Patent Literature 4 has a problem in terms of versatility in that it can be applied only to limited sensors. This is because it is a prerequisite for applying this countermeasure method that a user of the sensor can set the sampling interval of the sensor.

It is an object of the present invention to provide an attack detection device that detects an attack on a sensor and can be used for many types of sensors without requiring modification to the sensor itself and without adversely affecting other sensors.

### Solution to Problem

The present invention is defined in the appended set of claims.

### Advantageous Effects of Invention

According to the present invention, it is possible to provide an attack detection device that detects an attack on a sensor and can be used for many types of sensors without requiring modification to the sensor itself and without adversely affecting other sensors.

### Brief Description of Drawings

Fig. 1 is a diagram of a first embodiment and is a configuration diagram of an attack detection system;
Fig. 2 is a diagram of the first embodiment and is a diagram illustrating a configuration of an inclination sensor module;
Fig. 3 is a diagram of the first embodiment and is a hardware configuration diagram of an attack detection device;
Fig. 4 is a diagram of the first embodiment and is a hardware configuration diagram of an inclination sensor module;
Fig. 5 is a diagram of the first embodiment and is a diagram illustrating sensor data under normal conditions;
Fig. 6 is a diagram of the first embodiment and is a diagram illustrating correlation values under normal conditions;
Fig. 7 is a diagram of the first embodiment and is a diagram illustrating sensor data under abnormal conditions;
Fig. 8 is a diagram of the first embodiment and is a diagram illustrating correlation values under abnormal conditions;
Fig. 9 is a diagram of the first embodiment and is a diagram illustrating a flow of a sensor fusion algorithm;
Fig. 10 is a diagram of the first embodiment and is a diagram illustrating sensor fusion intermediate values under normal conditions;
Fig. 11 is a diagram of the first embodiment and is a diagram illustrating sensor fusion intermediate values under abnormal conditions;
Fig. 12 is a diagram of the first embodiment and is a sequence diagram illustrating operation of the attack detection system;
Fig. 13 is a diagram of the first embodiment and is a flowchart illustrating operation of a correlation calculation unit;
Fig. 14 is a diagram of the first embodiment and is a flowchart illustrating operation of an attack detection unit; and
Fig. 15 is a diagram of the first embodiment and is a diagram illustrating realization of the attack detection device by an electronic circuit.

**Description of Embodiments**

First Embodiment

\*\*\* Description of Configurations \*\*\*

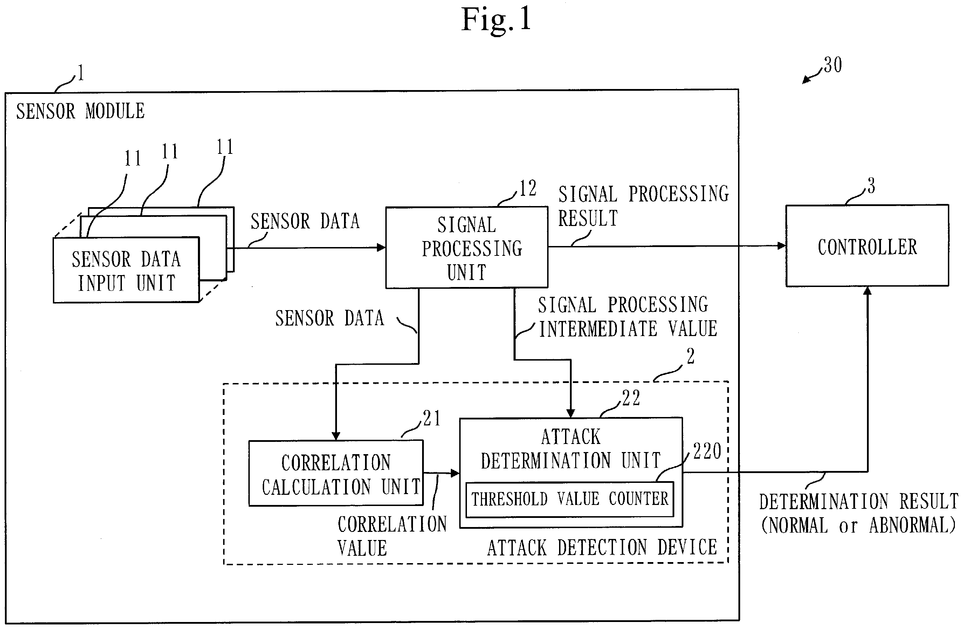

Fig. 1 illustrates a configuration of an attack detection system 30 of a first embodiment. The attack detection system 30 includes a sensor module 1 and a controller 3. The sensor module 1 includes a plurality of sensor data input units 11, a signal processing unit 12, and an attack detection device 2.

The attack detection device 2 includes a correlation calculation unit 21 and an attack determination unit 22. The attack determination unit 22 includes a threshold value counter 220. The correlation calculation unit 21 is a similarity calculation unit. The attack determination unit 22 is an intermediate value acquisition unit. The attack determination unit 22 is a determination unit.

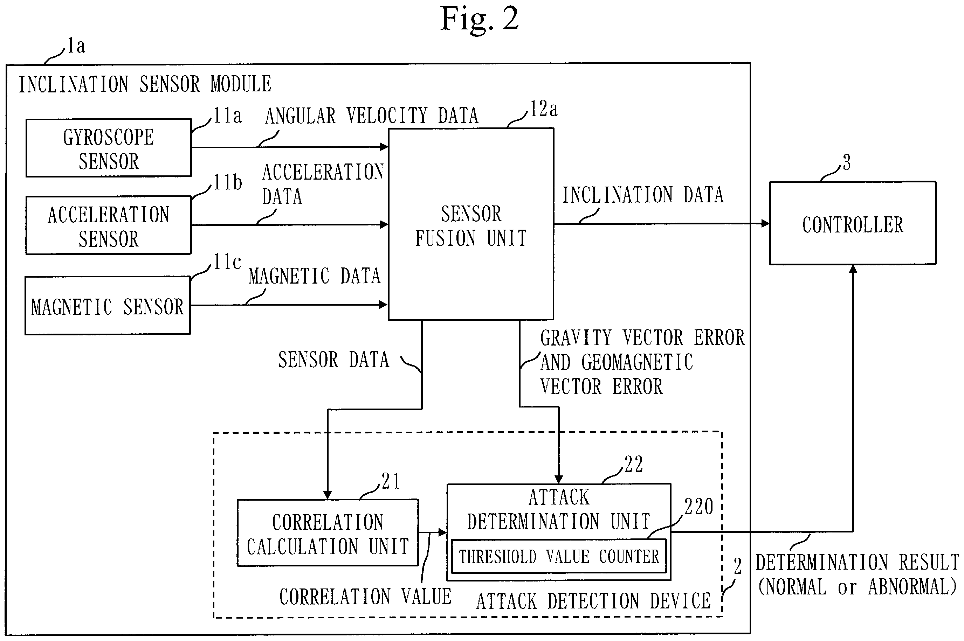

Fig. 2 illustrates an inclination sensor module 1a as a specific example of an AHRS in the attack detection system 30. Fig. 2 is the inclination sensor module 1a as a specific implementation of the sensor module 1. In the inclination sensor module 1a, the plurality of sensor data input units 11 are a gyroscope sensor 11a, an acceleration sensor 11b, and a magnetic sensor 11c. The signal processing unit 12 is a sensor fusion unit 12a. The attack detection device 2 is embedded in the inclination sensor module 1a.

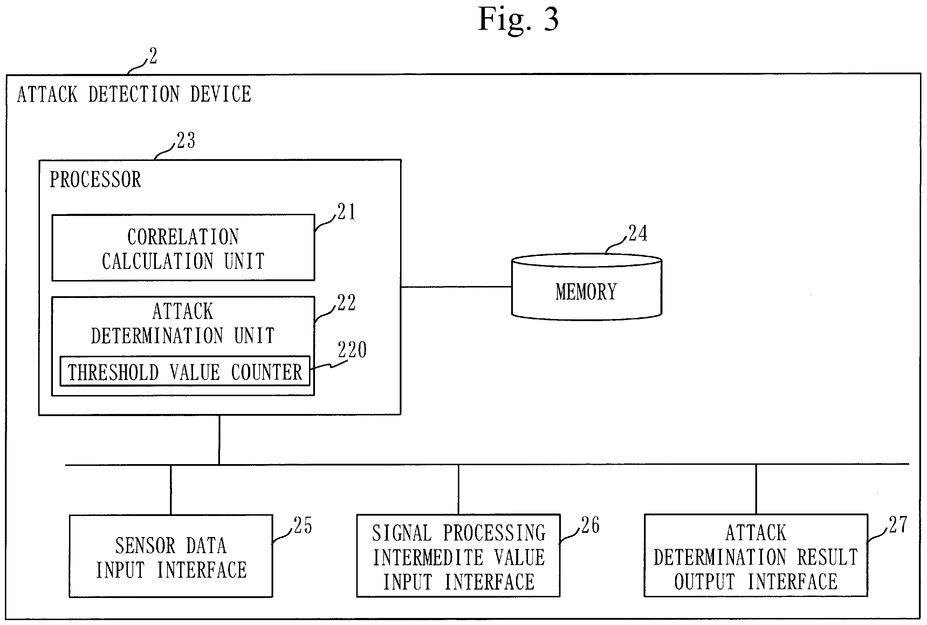

Fig. 3 illustrates a hardware configuration of the attack detection device 2. The attack detection device 2 includes, as hardware, a processor 23, a memory 24, a sensor data input interface 25, a signal processing intermediate value input interface 26, and an attack determination result output interface 27. The processor 23 has the correlation calculation unit 21 and the attack determination unit 22 as functional components. The attack determination unit 22 includes the threshold value counter 220. The functions of the correlation calculation unit 21 and the attack determination unit 22 are implemented as an attack detection program. The memory 24 stores the attack detection program that implements the functions of the correlation calculation unit 21 and the attack determination unit 22. The processor 23 executes the attack detection program that implements the functions of the correlation calculation unit 21 and the attack determination unit 22. The attack detection program may be stored and provided in a computer readable recording medium, or may be provided as a program product.

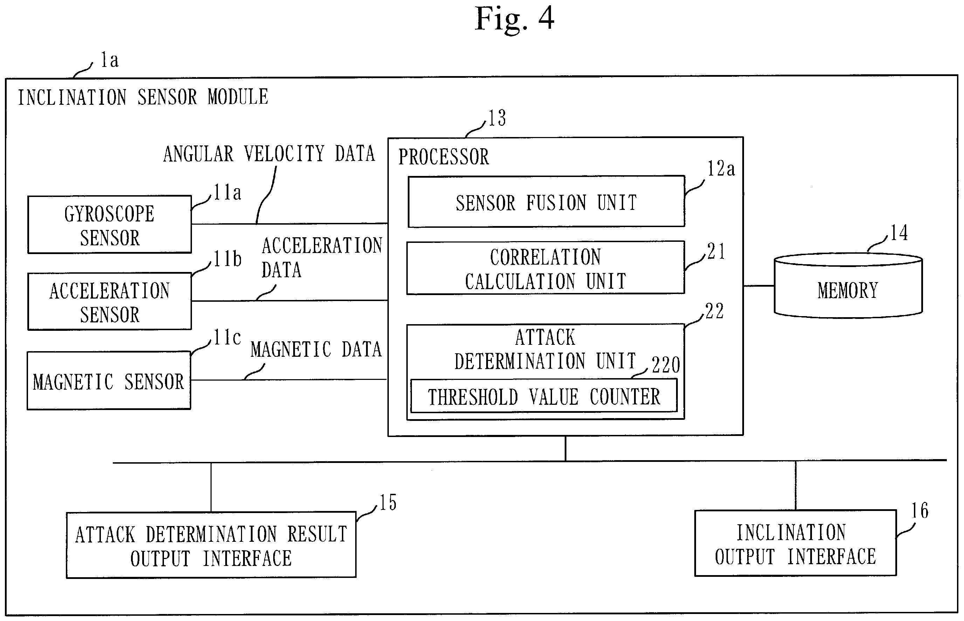

Fig. 4 is a configuration in which the attack detection device 2 is realized within a processor that performs signal processing in the inclination sensor module 1a. That is, Fig. 4 is a hardware configuration of the inclination sensor module 1a having the attack detection function. The inclination sensor module 1a includes, as hardware, the gyroscope sensor 11a, the acceleration sensor 11b, the magnetic sensor 11c, the processor 13, the memory 14, an attack determination result output interface 15, and an inclination output interface 16.

The processor 13 includes, as functional components, the sensor fusion unit 12a, the correlation calculation unit 21, and the attack determination unit 22. The functions of the sensor fusion unit 12a, the correlation calculation unit 21, and the attack determination unit 22 are implemented as the attack detection program. The memory 14 stores the attack detection program that implements the functions of the sensor fusion unit 12a, the correlation calculation unit 21, and the attack determination unit 22. The processor 13 executes the attack detection program that implements the functions of the sensor fusion unit 12a, the correlation calculation unit 21, and the attack determination unit 22. As described above, the attack detection program may be stored and provided in a computer readable recording medium, or may be provided as a program product.

\*\*\* Description of Operation \*\*\*

Operation of the attack detection device 2 will be described. The operation of the attack detection device 2 is operation implemented by execution of the attack detection program by the attack detection device 2. The operation of the attack detection device 2 is an attack detection method.

The operation of the attack detection device 2 will be described, assuming the inclination sensor module 1a illustrated in Fig. 2. The attack detection device 2 uses two main methods on the basis of a characteristic that an attack is detected based on an inconsistency between sets of sensor data in the attack detection device 2.

<First method>

The first method for detecting an inconsistency between sets of sensor data is to look at a correlation between the sets of sensor data.

The first method uses the fact that physical states observed by various sensors coincide with each other during normal operation of the AHRS, so that a high correlation appears between sets of sensor data. In particular, the acceleration sensor 11b and the magnetic sensor 11c are common in that each indicates a certain direction at a certain point, namely gravity and the geomagnetic field, respectively. Therefore, the correlation between them is high.

<Second method>

The second method for detecting an inconsistency between sets of sensor data is to look at intermediate values of sensor fusion. What is simply described as sensor fusion signifies execution of a sensor fusion algorithm.

The second method assumes a sensor fusion algorithm that calculates an inclination by measuring an error between sets of sensor data and correcting a measurement value based on that error. Therefore, the attack detection device 2 looks at a sensor fusion error to find an inconsistency between physical states observed by sensors.

For example,

(1) the gyroscope sensor 11a and the acceleration sensor 11b can both observe gravity, and
(2) the gyroscope sensor 11a and the magnetic sensor 11c can both observe the geomagnetic field.

Therefore, by looking at a gravity error and a geomagnetic error calculated by the sensor fusion algorithm in the process of calculating an inclination, inconsistencies can be detected for these two types of combinations of sensors.

By combining the first method and the second method, inconsistencies can be detected for all of the following three combinations:

(1) the gyroscope sensor 11a and the acceleration sensor 11b,
(2) the gyroscope sensor 11a and the magnetic sensor 11c, and
(3) the acceleration sensor 11b and the magnetic sensor 11c.

In the following, the effectiveness and feasibility of this technique will be indicated using the actual inclination sensor module 1a as a target module. Each of the three types of sensors constituting the inclination sensor module 1a, which is the target module, has three axes, namely X, Y, and Z axes.

First, the first method that detects inconsistencies between sets of sensor data by correlation will be described. In the first method, consistencies between the acceleration sensor 11b and the magnetic sensor 11c will be checked. Specifically, the effectiveness of the first method will be indicated by comparing correlations between sets of sensor data during normal operation with correlations between sets of sensor data during abnormal operation under an attack.

Correlations during normal operation are obtained first.

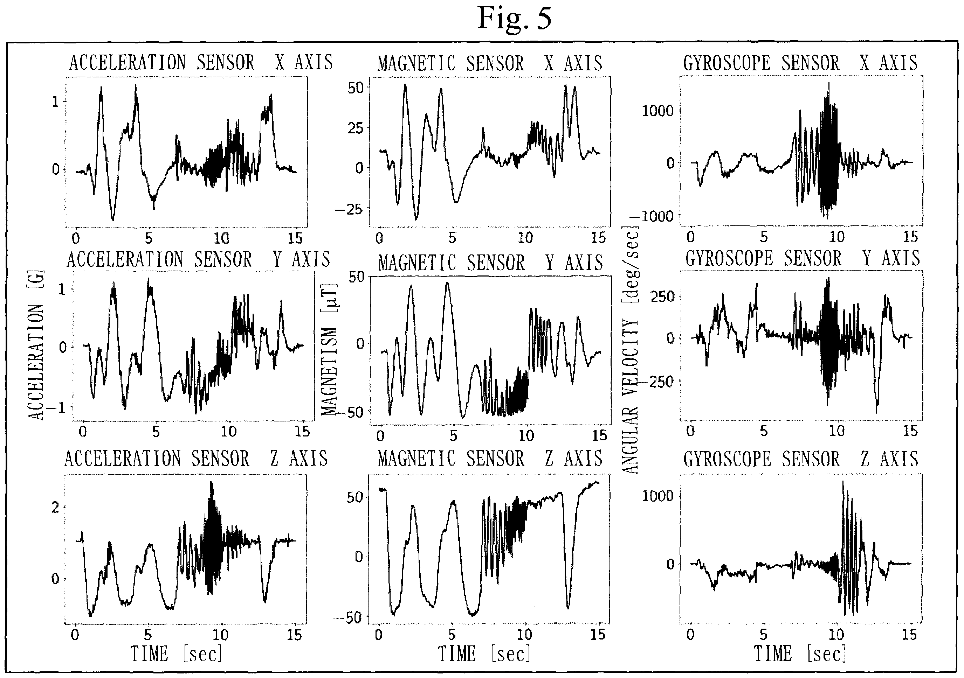

Fig. 5 indicates sensor data during normal operation. Fig. 5 is sensor data when the inclination sensor module 1a was moved by holding it by hand. Sensor data of the acceleration sensor 11b, the magnetic sensor 11c, and the gyroscope sensor 11a is indicated from the left. Sensor data of the X axis, the Y axis, and the Z axis is indicated from the top to the bottom in Fig. 5. In each set of sensor data, the horizontal axis is time and the vertical axis is the measurement value of the sensor. Under normal conditions, the acceleration sensor 11b and the magnetic sensor 11c appear to be similar in terms of states of changes over time.

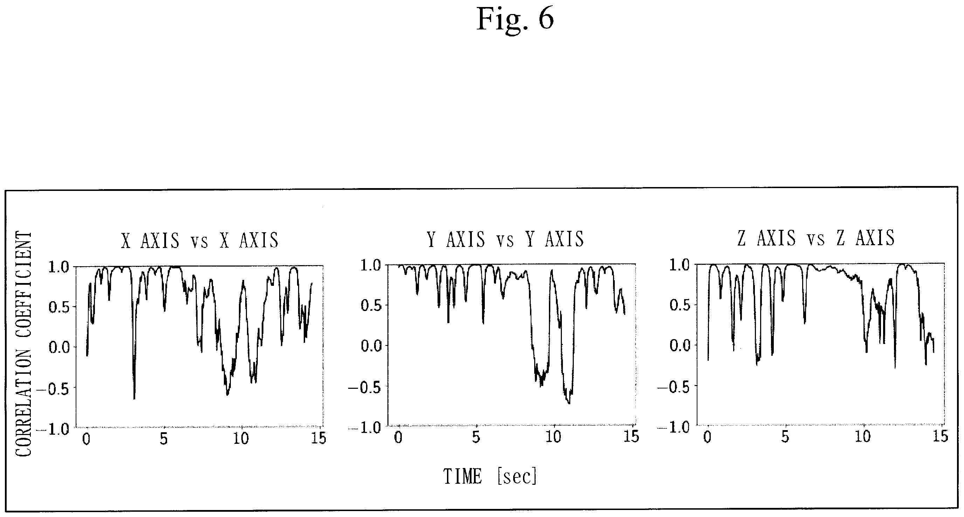

Fig. 6 is results of calculating correlation coefficients between the acceleration sensor 11b and the magnetic sensor 11c for each of the X, Y, and Z axes. In Fig. 6, a certain time window is used to divide data and correlations are calculated on a sample by sample basis. As a result, it can be seen that the correlation coefficients are mostly above 0.6, indicating high correlations. At 7 to 12 seconds, correlations are low because the inclination sensor module 1a was moved vigorously. In Fig. 6, the Pearson correlation coefficient between two series $x_i$ and $y_i$ ($i = 1, 2, ..., n$) can be obtained by the following correlation equation.

[Formula 1]

$$\text{correlation} = \frac{\sum_{i=1}^{n}(x_i - \bar{x})(y_i - \bar{y})}{\sqrt{\left(\sum_{i=1}^{n}(x_i - \bar{x})^2\right)\left(\sum_{i=1}^{n}(y_i - \bar{y})^2\right)}}$$

[Formula 2]

$$\bar{x}, \quad \bar{y}$$

denote the arithmetic averages of xi and yi, respectively.

Next, correlations during abnormal operation are obtained.

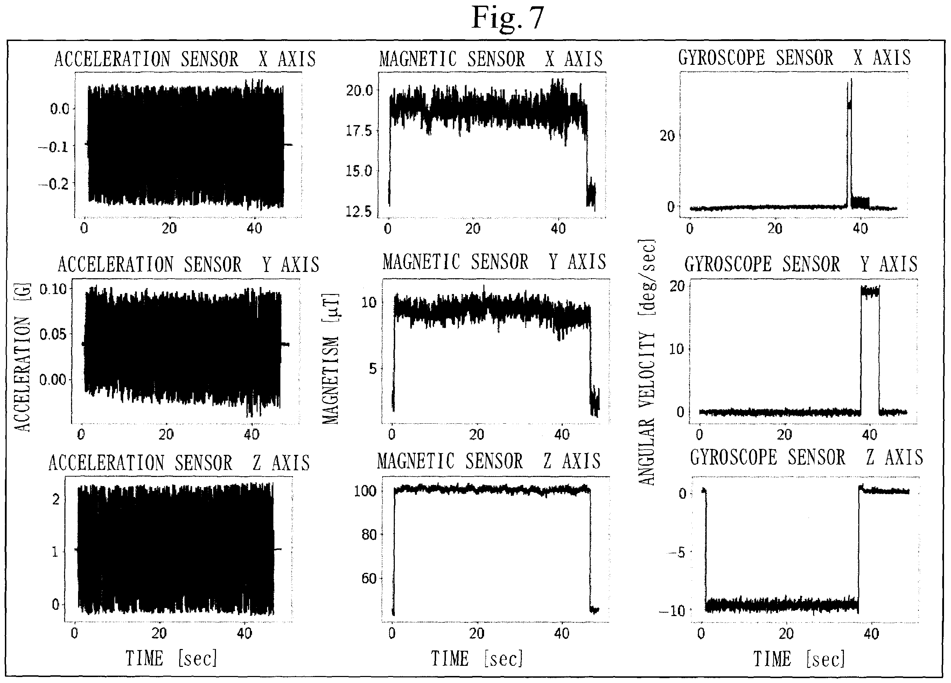

Fig. 7 is sensor data when an attack was performed on the inclination sensor module 1a in a stationary state by a method discussed in Reference Literature 1 to be described later. Sensor data of the acceleration sensor 11b, the magnetic sensor 11c, and the gyroscope sensor 11a is indicated from the left in Fig. 7. The values of the horizontal axis and the vertical axis and the arrangement of sensor data of the X, Y, and Z axes are the same as those in Fig. 5. In Fig. 7, each of the sensors is affected by the attack. The sensor data of each axis of the acceleration sensor 11b changes in a sine wave pattern, and the sensor data of each of the magnetic sensor 11c and the gyroscope sensor 11a is fixed in a biased pattern.

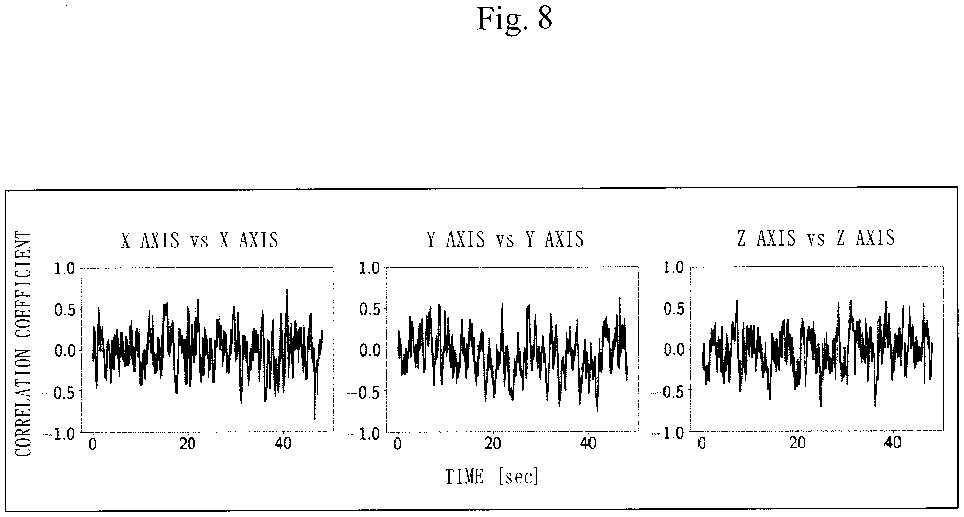

Fig. 8 indicates results of calculating correlation coefficients between the acceleration sensor 11b and the magnetic sensor 11c for each of the X, Y, and Z axes. In Fig. 8, a certain time window is used to divide data and correlations are calculated on a sample by sample basis, as in Fig. 6. As a result, it can be seen that the correlation coefficients mostly fall within the range of -0.5 to 0.5 throughout the entire time period, indicating no correlation. As can be seen when the correlations under normal conditions indicated in Fig. 6 are compared with the correlations during the attack indicated in Fig. 8, it can be seen that the presence or absence of an attack can be determined by determining the presence of an attack if the correlation value goes beyond a certain threshold value. In this case, if the correlation value is smaller than the threshold value with respect to the threshold value, the presence of an attack can be determined. It has been described that even during normal operation, low correlations are observed when the inclination sensor module 1a was moved vigorously. Regarding this, an attack can be distinguished from an error by determining the presence of an attack if low correlations are observed for a certain period of time. That is, in the case of an attack, a state in which correlation values are low continues for a longer period of time than in the case of an error.

Such an attack on the AHRS is described in the following Reference Literature 1.

Reference Literature 1: Nashimoto, Suzuki, et al., "A Security Evaluation of Attack Resilience of Sensor Fusion", SCIS2018 2018 Symposium on Cryptography and Information Security Niigata, Japan, Jan.23-26,2018,The Institute of Electronics, Information and Communication Engineers.

The second method that detects an inconsistency using intermediate values of sensor fusion will now be described. In order to do so, the technology of sensor fusion will be described first based on Non-Patent Literature 2.

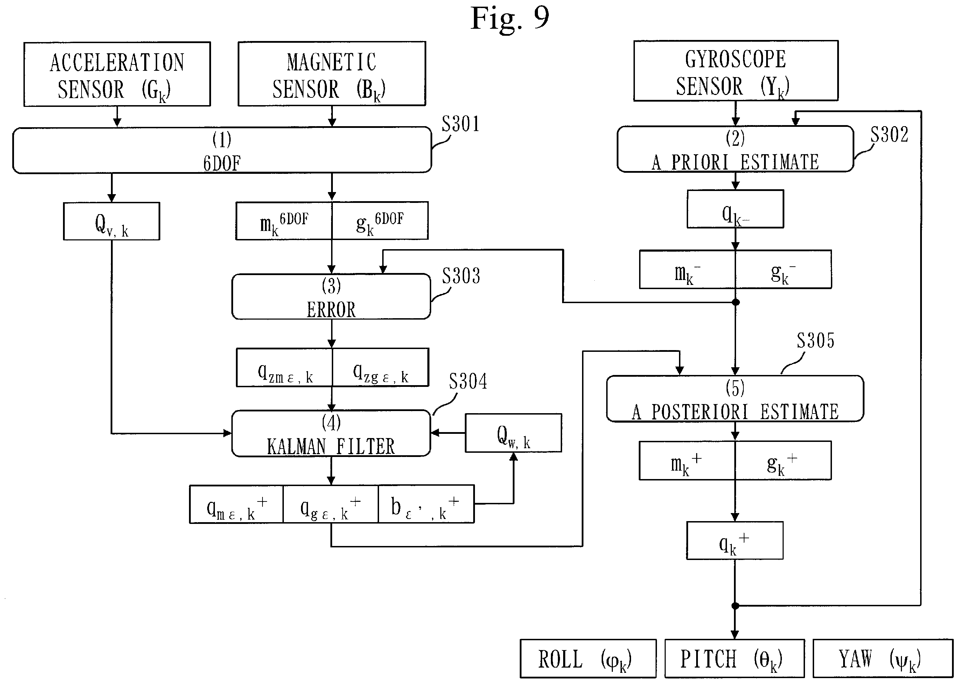

Fig. 9 illustrates a flow of sensor fusion. Fig. 9 illustrates operation of the sensor fusion unit 12a. The following description assumes the inclination sensor module 1a of Fig. 2. The input is sensor data of the gyroscope sensor 11a, the acceleration sensor 11b, and the magnetic sensor 11c, and the output is an inclination. There is sensor data of each of the three axes of X, Y, and Z, and sensor data of the acceleration sensor 11b, the magnetic sensor 11c, and the gyroscope sensor 11a is represented in vectors as $<G_k>$, $<B_k>$, and $<Y_k>$, respectively. For convenience, the expression $<*>$ denotes that $*$ is a vector. Note that k denotes the k-th iteration process of sensor fusion. The inclination is given by Euler angles of roll, pitch, and yaw, which are represented as $\varphi_k$, $\theta_k$, and $\psi_k$, respectively. In the internal process of sensor fusion, the inclination is represented by a three-dimensional rotation matrix $[R_k]$ or a quaternion q, each of which can be converted into the other. For convenience, the expression $[*]$ denotes that $*$ is a matrix. The expression $<q>$ denotes only a vector portion that is extracted from the quaternion q.

In sensor fusion of the AHRS, a geomagnetic vector and a gravity vector have important roles. The geomagnetic vector $<m>$ is a unit vector parallel to the magnetic field of the Earth, and the gravity vector $<g>$ is a unit vector pointing to the center of the Earth. It is important that when $<m>$ and $<g>$ are given, the inclination is uniquely determined. Conversely, $<m>$ and $<g>$ can be calculated from the inclination.

The basic definitions required hereinafter will be described below. The notation is in accordance with Non-Patent Literature 2. The premise is that the inclination ($[R_k]$) in world coordinates is given as a three-dimensional rotation matrix by the following equation (1).
[Formula 3]

$$R_k = \begin{pmatrix} R_{xx,k} & R_{xy,k} & R_{xz,k} \\ R_{yx,k} & R_{yy,k} & R_{yz,k} \\ R_{zx,k} & R_{zy,k} & R_{zz,k} \end{pmatrix} \qquad (1)$$

The relationship between sensor data and the rotation matrix is defined as indicated in the following equation (2).
[Formula 4]

$$R_k = \left( \begin{pmatrix} R_{xy,k} \\ R_{yy,k} \\ R_{zy,k} \end{pmatrix} \times \begin{pmatrix} R_{xz,k} \\ R_{yz,k} \\ R_{zz,k} \end{pmatrix}, \; \left( \frac{G_k \times B_k}{|G_k \times B_k|} \right), \; \frac{G_k}{|G_k|} \right) \qquad (2)$$

This equation (2) can be explained as follows. In this algorithm, North, East, Down (NED) coordinates are especially adopted. Therefore, since the Z axis of [$R_k$] indicates the direction of gravity, it is calculated only based on the acceleration sensor 11b. Since the magnetic sensor 11c indicates the northward direction facing downward, the cross product of $<G_k>$ and $<B_k>$ indicates the East direction along the Y axis. The remaining X axis can be calculated as the cross product of the other two.

The flow of the sensor fusion unit in Fig. 9 will be described based on the above basic equations. In step S301 of Fig. 9, a geomagnetic vector $<m_k^{6DOF}>$, a gravity vector $<g_k^{6DOF}>$, and an observation error $<Q_k>$ are calculated from six degrees of freedom (6DOF) sensor data. The geomagnetic vector represents the magnetic field of the Earth in a three-dimensional space (X, Y, and Z coordinates). The geomagnetic vector is the following equation (3).

Similarly, the gravity vector represents the field of gravity. The gravity vector is the following equation (4).

That is, they are as indicated below.

[Formula 5]

$$m_k^{6DOF} = \frac{B_k}{|B_k|} \qquad (3)$$

$$g_k^{6DOF} = \frac{G_k}{|G_k|} \qquad (4)$$

Main components of the observation error $<Q_{v,k}>$ are disturbance and sensor noise.

Disturbance includes acceleration $<Q_{a,k}>$ and magnetic disturbance $<Q_{d,k}>$.

Sensor noise includes $<Q_{vB,k}>$ in an acceleration sensor and $<Q_{vG,k}>$ in a compass.

Therefore, the absence of any observation error can be expressed by the following equations (5) and (6).

[Formula 6]

$$Q_{vB,k} + Q_{d,k} \approx 3(|B_k| - B)^2 = 0 \qquad (5)$$

$$Q_{vG,k} + Q_{a,k} \approx 3(|G_k| - g)^2 = 0 \qquad (6)$$

Note that $<g>$ denotes gravity acceleration and $<B>$ denotes local geomagnetic field strength.

In step S302 of Fig. 9, the inclination is obtained from the gyroscope $<Y_k>$. This may be done by integrating an angular velocity measured by the gyroscope with an immediately preceding estimate value $q^+_{k-1}$ of the inclination. First, the drift of the gyroscope is compensated with an offset $<b_k^->$, which is expressed by the following equation (7).

[Formula 7]

$$\omega_k^- = Y_k - b_k^- \qquad (7)$$

Next, an a priori estimate value of the inclination is as indicated in the following equation (8).

[Formula 8]

$$q_k^- = q_{k-1}^+ \Delta q(\omega_k^- \delta t) \qquad (8)$$

Note that $\delta t$ is the update interval of the Kalman filter.

Note that $\Delta q$ denotes a quaternion that converts an angle $|(\omega_k^-)|\delta t$ to rotation, and is expressed by the following equation (9).

[Formula 9]

$$\Delta_q(\boldsymbol{\omega}_k \delta t) = \{q_0, \boldsymbol{q}\} = \{q_0, q_1, q_2, q_3\}$$

$$= \left\{ \sqrt{1 - q_1^2 - q_2^2 - q_3^2}, \; \frac{\boldsymbol{\omega}_k}{|\boldsymbol{\omega}_k|} \sin\left( \frac{|\boldsymbol{\omega}_k|\delta t}{2} \right) \right\} \qquad (9)$$

By using the inclination $q_k^-$ obtained with the gyroscope, the directions of gravity and the geomagnetic field can be obtained by equation (2). These will be referred to as a gravity vector $<g_k^->$ and a geomagnetic vector $<m_k^->$.

So far, sets of the gravity vector and the geomagnetic vector obtained by the two methods, that is,

$$\{<g_k{}^{6DOF}>, <m_k{}^{6DOF}>\} \text{ and } \{<g_k{}^->, <m_k{}^->\}$$

have been obtained.

In step S303 of Fig. 9, $\{<g_k{}^{6DOF}>, <m_k{}^{6DOF}>\}$ is compared with $\{<g_k{}^->, <m_k{}^->\}$ to calculate a priori error estimates individually for the gravity vector and the geomagnetic vector.

The error between $<g_k{}^{6DOF}>$ and $<g_k{}^->$ is a rotation quaternion $q_{zg\varepsilon,k}$ that makes one coincide with the other, and can be obtained from $<g_k{}^{6DOF}>$ and $<g_k{}^->$.

Similarly, the error $q_{zme,k}$ between $<m_k{}^{6DOF}>$ and $<m_k{}^->$ is obtained.

Generally, a rotation quaternion for making a vector $<r>$ coincide with another vector $<s>$ can be obtained by the following equation (9-1).

[Formula 10]

$$q = \frac{|\boldsymbol{r}||\boldsymbol{s}| + \boldsymbol{r} \cdot \boldsymbol{s} - \boldsymbol{r} \times \boldsymbol{s}}{\sqrt{2|\boldsymbol{r}||\boldsymbol{s}|(|\boldsymbol{r}||\boldsymbol{s}| + \boldsymbol{r} \cdot \boldsymbol{s})}} \qquad (9-1)$$

Note that · and X denote the inner product and cross product of the vectors, respectively.

Equation (9-1) can be used to calculate the two types of rotation quaternions representing the errors.

In step S304 of Fig. 9, the Kalman filter is used to obtain an a posteriori error estimate. A Kalman gain is expressed using a Kalman filter model error $<Q_{W,k}>$ and an observation error $<Q_{v,k}>$ as indicated in the following equation (10).

[Formula 11]

$$K_k = Q_{w,k} C_k^T (C_k Q_{w,k} C_k^T + Q_{v,k})^{-1} \qquad (10)$$

Note that $[C_k]$ is what is referred to as an observation matrix in the Kalman filter.

An a posteriori estimate $x_{\varepsilon,k}^+$ of the observation error is given by the following equation (11).

[Formula 12]

$$x_{\epsilon,k}^+ = \begin{pmatrix} q_{g\epsilon,k}^+ \\ q_{m\epsilon,k}^+ \\ b_{\epsilon,k}^+ \end{pmatrix} = K_k \begin{pmatrix} q_{zg\epsilon,k} \\ q_{zm\epsilon,k} \end{pmatrix} \qquad (11)$$

In step S305 of Fig. 9, the a posteriori error estimate is used to correct the a priori estimates of the geomagnetic vector and the gravity vector originated from the gyroscope, so as to obtain an a posteriori estimate of the inclination. A posteriori estimates of the geomagnetic vector $<m_k^->$ and the gravity vector $<g_k^->$ are given by the following equations (12) and (13) by rotating the a priori estimates only by the amount of the error.
[Formula 13]

$$m_k^+ = q_{m\epsilon,k}^+ m_k^- (q_{m\epsilon,k}^+)^* \qquad (12)$$

$$g_k^+ = q_{g\epsilon,k}^+ g_k^- (q_{g\epsilon,k}^+)^* \qquad (13)$$

In equations (12) and (13), * denotes conjugate.
Furthermore, by substituting equations (12) and (13) into equation (2), an a posteriori estimate $[R_K^+]$ of the inclination is obtained. Finally, the inclination, that is, roll $\varphi_k$, pitch $\theta_k$, yaw angle $\psi_k$, is expressed by the following equation (14).
[Formula 14]

$$(\emptyset_k, \theta_k, \psi_k) = \left( \tan^{-1}\left(\frac{R_{yz}^+}{R_{zz}^+}\right), -\sin^{-1}(R_{xz}^+), \tan^{-1}\left(\frac{R_{xy}^+}{R_{xx}^+}\right) \right) \qquad (14)$$

By repeating the above process, the inclination is calculated successively.
In attack detection by the attack detection device 2, the presence or absence of an attack is determined by looking at the gravity vector error $q_{zg\epsilon,k}$ and the geomagnetic vector error $q_{zm\epsilon,k}$ calculated based on the errors in step S303 of Fig. 9. That is, the attack detection device 2 focuses attention only on the vector components of the rotation quaternion.
A specific explanation will be given using the sensor data under normal conditions and abnormal conditions indicated in Figs. 5 and 7, respectively.

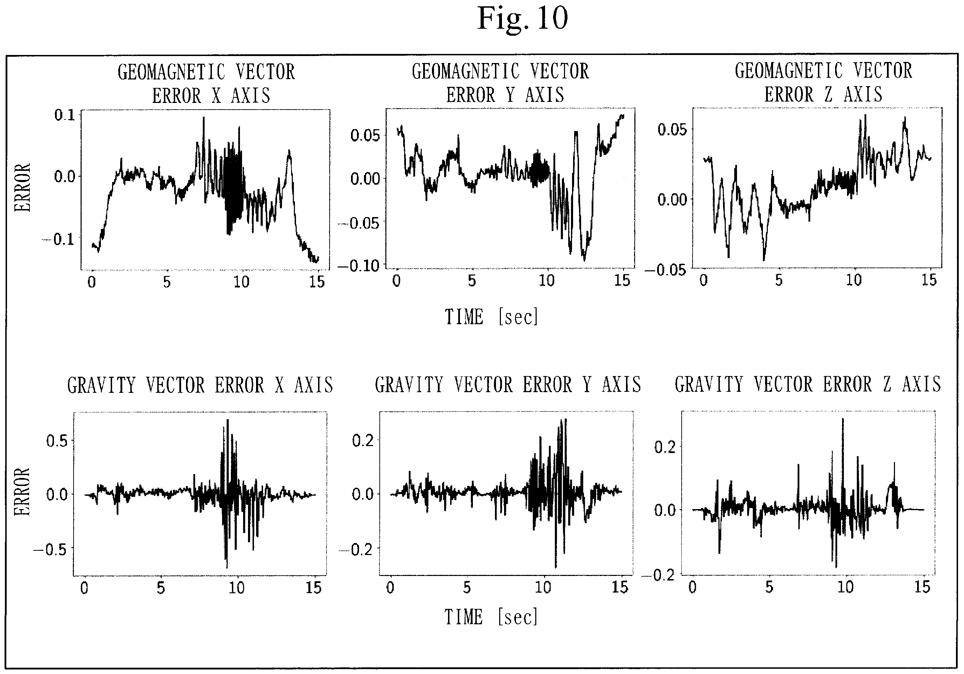

Fig. 10 indicates geomagnetic vector errors and gravity vector errors under normal conditions. In each of the six graphs in Fig. 10, the horizontal axis is time and the vertical axis is the error.

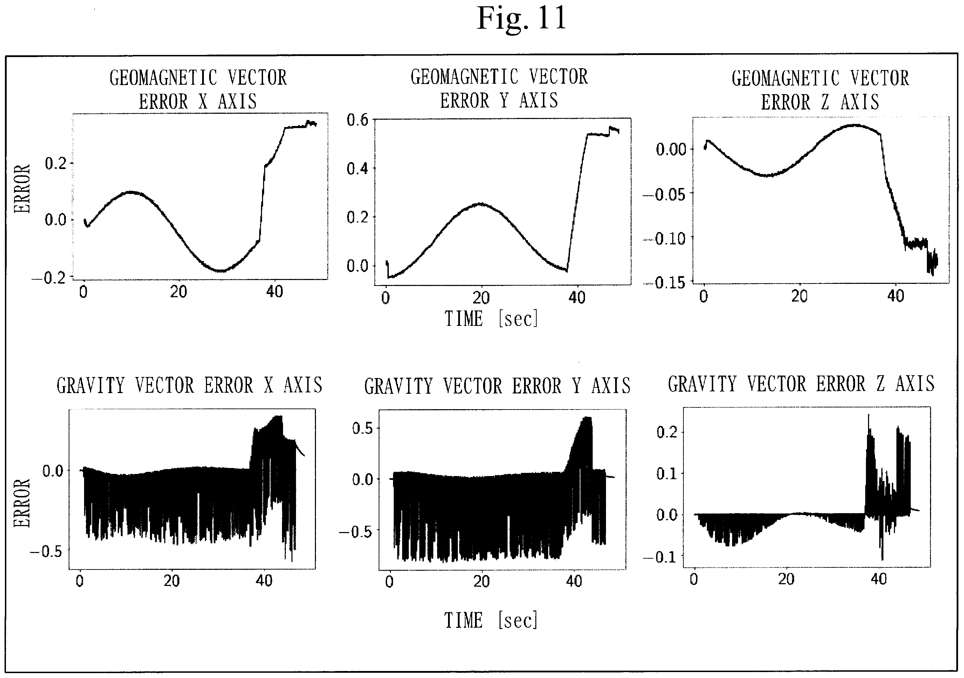

Fig. 11 indicates geomagnetic vector errors and gravity vector errors during an attack. The six graphs in Fig. 11 correspond to the six graphs in Fig. 10. When Fig. 10 is compared with Fig. 11, the errors are greater during an attack. Especially with regard to the gravity vector, the difference is remarkable. The method of detecting an inconsistency between sensors by looking at errors can also determine the presence or absence of an attack by determining the presence of an attack if an error exceeds a certain threshold value.
The above two inconsistency detection methods are applied to the attack detection device 2.

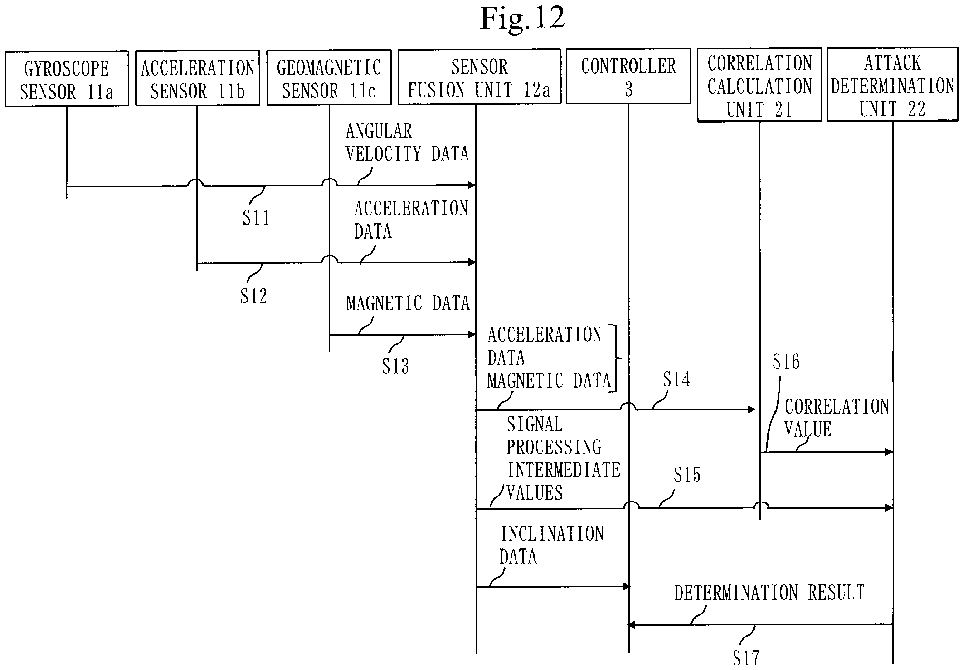

Fig. 12 is a sequence illustrating operation of the attack detection system 30 including the attack detection device 2. Referring to Fig. 12, operation of the attack detection device 2 will be described.
In step S11, the gyroscope sensor 11a transmits angular velocity data to the sensor fusion unit 12a.
In step S12, the acceleration sensor 11b transmits acceleration data to the sensor fusion unit 12a.
In step S13, the magnetic sensor 11c transmits magnetic data to the sensor fusion unit 12a.
In step S14, the sensor fusion unit 12a transmits the acceleration data and the magnetic data to the correlation calculation unit 21.
Then, the sensor fusion unit 12a performs sensor fusion using the angular velocity data, the acceleration data, and the magnetic data, as described in the explanation of Fig. 9. By this, the inclination is calculated by the sensor fusion unit 12a. In the process of calculating the inclination by the sensor fusion unit 12a, sensor fusion error data, which is errors of physical quantities measured by each sensor, is obtained. In step S15, the sensor fusion unit 12a transmits the sensor fusion error data, which is signal processing intermediate values, to the attack determination unit 22.

The correlation calculation unit 21 calculates correlations between the acceleration data and the magnetic data. In step S16, the correlation calculation unit 21 transmits the calculated correlation values to the attack determination unit 22. In step S17, the attack determination unit 22 determines the presence or absence of an attack based on the sensor fusion error data and the correlation values, and transmits a determination result to the controller 3.

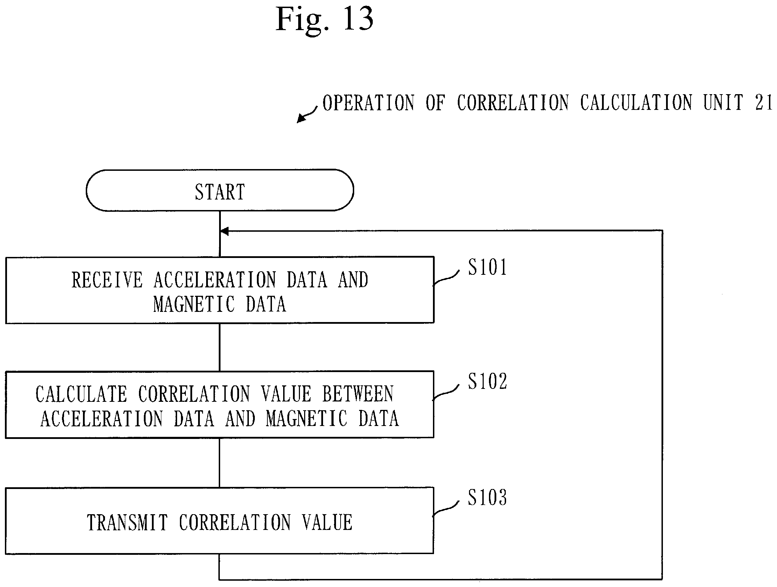

Fig. 13 is a flowchart illustrating operation of the correlation calculation unit 21. Referring to Fig. 13, the operation of the correlation calculation unit 21 will be described.

In step S101, the correlation calculation unit 21 receives acceleration data and magnetic data from the sensor fusion unit 12a.

In step S102, the correlation calculation unit 21 calculates correlation coefficients between the acceleration data and the magnetic data.

In step S103, the correlation calculation unit 21 transmits the correlation values to the attack determination unit 22.

As described above, the correlation calculation unit 21, which is the similarity calculation unit, acquires sensor data of the acceleration sensor 11b and the magnetic sensor 11c, which are two sensors of the plurality of sensors, and calculates correlation values between two sets of sensor data as similarities. As will be described later, the attack determination unit 22 compares a similarity threshold value with each of the correlation values, which are similarities, to determine whether there is an attack on at least one sensor of the plurality of sensors.

The two sensors for which similarities are calculated have different observable physical quantities. Specifically, the observable physical quantity of the acceleration sensor 11b is gravity, and the observable physical quantity of the magnetic sensor 11c is the geomagnetic field.

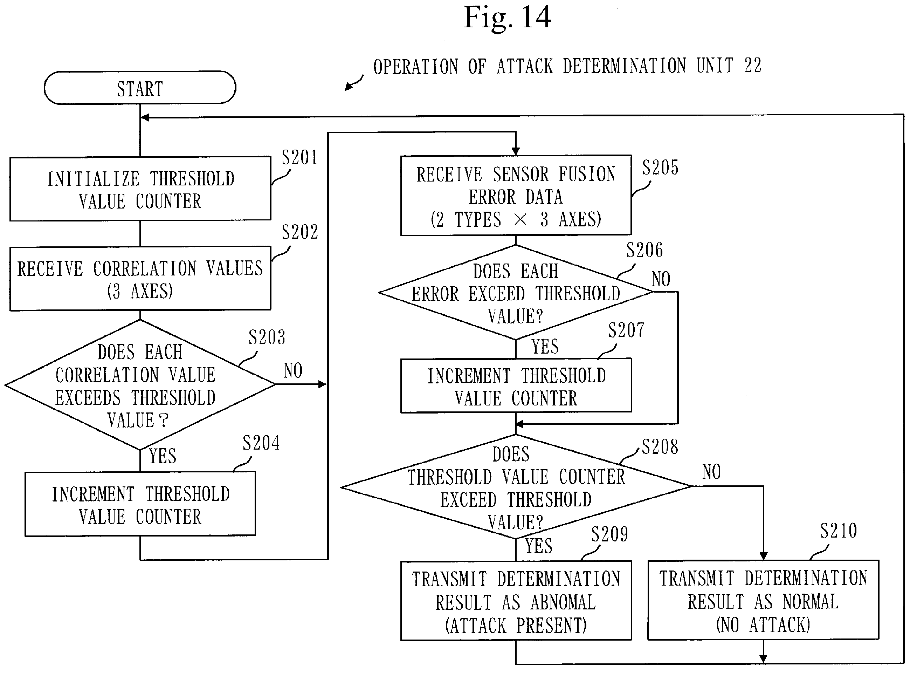

Fig. 14 is a flowchart illustrating operation of the attack determination unit 22. Referring to Fig. 14, the operation of the attack determination unit 22 will be described. The attack determination unit 22 uses correlation values and sensor fusion error data to count the number of times when each exceeds a threshold value, and determines the presence of an attack when the count exceeds a threshold value. This will be described specifically below.

In step S201, the attack determination unit 22 initializes the threshold value counter 220.

In step S202, the attack determination unit 22 receives correlation values from the correlation calculation unit 21.

In step S203, the attack determination unit 22 determines, for each axis, whether the correlation value exceeds a preset correlation-value threshold value for each axis. If the correlation value exceeds the threshold value, the attack determination unit 22 increments the threshold value counter 220 in step S204. Since there are three axes, the upper limit of the counter for the correlation value is 3.

There are three threshold values: the threshold value for the X axis, the threshold value for the Y axis, and the threshold value for the Z axis. These will be denoted as a threshold value 1, a threshold value 2, and a threshold value 3, respectively. The threshold value 1, the threshold value 2, and the threshold value 3 will be referred to as similarity threshold values. The threshold value 1 is the threshold value for the X axis, the threshold value 2 is the threshold value for the Y axis, and the threshold value 3 is the threshold value for the Z axis.

In step S205, the attack determination unit 22 receives sensor fusion error data, which is signal processing intermediate values, from the sensor fusion unit 12a.

In step S206, the attack determination unit 22 determines whether the error of each axis exceeds a threshold value with regard to two types of physical quantities of the gravity vector and the geomagnetic vector. Since determinations are performed for three axes for each of the two types of errors, the upper limit of the counter regarding the errors is 6. There are six axes in total, three axes for the gravity vector and three axes for the geomagnetic vector, and a threshold value is set separately for each of the axes.

The threshold values for the X axis, the Y axis, and the Z axis of the gravity vector will be denoted as a threshold value 4, a threshold value 5, and a threshold value 6, respectively. The threshold values for the X axis, the Y axis, and the Z axis of the geomagnetic vector will be denoted as a threshold value 7, a threshold value 8, and a threshold value 9, respectively. The threshold values 4 to 9 will be referred to as intermediate-value threshold values.

The attack determination unit 22 increments the threshold value counter if each error exceeds the corresponding threshold value, and does not increment the threshold value counter if each error does not exceed the threshold value for the error (step S207).

Since the threshold values are the threshold values 1 to 9, the threshold value counter 220 becomes 9 at the maximum and 0 at the minimum as a result of steps S203 and S206.

In step S208, the attack determination unit 22 determines whether the threshold value counter 220 exceeds a predetermined threshold value. This threshold value is the threshold value for the threshold value counter 220 different from the threshold values 1 to 9. This threshold value will be referred to as a counter threshold value. If the threshold value counter 220 exceeds the counter threshold value, the attack determination unit 22 determines the presence of an attack and transmits an anomaly notification to the controller 3 (step S209). If the threshold value counter 220 does not exceed the counter threshold value, the attack determination unit 22 determines the absence of an attack and transmits a normal-state notification to the controller 3 (step S210).

For example, when the counter threshold value is 1, if even one of the values compared with the threshold values 1 to 9 exceeds the threshold value, the attack determination unit 22 determines the presence of an attack. When the counter threshold value is 5, if six or more of the nine values compared with the threshold values 1 to 9 exceed the threshold value, the attack determination unit 22 determines the presence of an attack.

As described above, the attack determination unit 22 acquires the respective intermediate values during execution of the sensor fusion algorithm. The sensor fusion algorithm executed by the sensor fusion unit 12a is an algorithm that calculates an output by combining a plurality of physical quantities observed by the gyroscope sensor 11a, the acceleration sensor 11b, and the magnetic sensor 11c, which are a plurality of sensors of different types. The plurality of physical quantities here are gravity and the geomagnetic field. The sensor fusion algorithm is the algorithm that calculates the gravity vector error $q_{zg\varepsilon,k}$ and the geomagnetic vector error $q_{zm\varepsilon,k}$, which are the respective intermediate values of the plurality of physical quantities, and changes the output using the respective intermediate values.

In this way, the respective intermediate values are the respective error data of the plurality of physical quantities observed by the plurality of sensors of different types.

The attack determination unit 22 compares the gravity vector error $q_{zg\varepsilon,k}$ and the geomagnetic vector error $q_{zm\varepsilon,k}$, which are the respective intermediate values, with the threshold values 4 to 9, which are the intermediate-value threshold values, so as to determine whether there is an attack on at least one sensor of the plurality of sensors.

The correlation calculation unit 21 may calculate similarities by the following methods instead of using the Pearson correlation coefficient.

(1) The correlation calculation unit 21 calculates mutual correlations, amounts of mutual information, or likelihoods.
(2) The correlation calculation unit 21 calculates geometric distances (Euclidean distance, Mahalanobis distance, Manhattan distance, Chebyshev distance, Minkowski distance, etc.).

The attack determination unit 22 can weight the intermediate-value threshold values depending on the types of intermediate values, and can weight the similarity threshold values depending on the types of two sets of sensor data. The weighting of the intermediate-value threshold values may change the intermediate-value threshold values or may change intermediate values. Similarly, the weighting of the similarity threshold values may change the similarity threshold values or may change similarities.

Specifically, the attack determination unit 22 can realize the threshold value counter 220 by the following methods.

(1) With regard to each of the correlation value and the error, the value to be incremented when the threshold value is exceeded is weighted, or weighting is performed by changing the threshold value itself. For example, when there is a combination of sensor data with which a correlation is not likely to appear between sets sensor data, a large value is set as the threshold value to be compared with a correlation value calculated from that combination so as to lower the importance.
(2) Depending on the axis for which comparison with the threshold value is performed, the value to be incremented when the threshold value is exceeded is weighted, or weighting is performed by changing the threshold value itself. For example, when it is known that a mobile robot having an acceleration sensor only moves in the horizontal direction, a large value is set as the threshold value to be compared with a gravity vector error of the axis representing the direction of gravity (for example, the Z axis) so as to lower the importance.
(3) Differences between a correlation value and the corresponding threshold value and between an error and the corresponding threshold value are stored in the threshold value counter.
(4) The values to be stored in (3) are weighted, depending on whether each value is a correlation value or error, or depending on the type of the axis.

The signal processing unit 12 may be realized not only by the sensor fusion algorithm using the Kalman filter described in the first embodiment, but also by algorithms that perform state estimation as follows:

(1) a sensor fusion algorithm using a particle filter, and
(2) a sensor fusion algorithm using a Bayesian filter.

*** Description of Effects of First Embodiment ***

The attack detection device 2 of the first embodiment can detect an attack on a sensor based on an inconsistency between sets of sensor data, using the fact that when sensors observe different physical states due to an attack, this results in low correlation values and large sensor fusion errors.

Even with a black box sensor whose internal structure is unknown, an attack detection mechanism can be introduced by extracting sensor data and intermediate values of signal processing and connecting an attack detection device separately. Therefore, an attack can be detected without any modification to the sensor.

In addition, since the attack detection device 2 detects an attack independently of measurement by sensors, it does not adversely affect measurement by the sensors.

In the first embodiment, the inclination sensor module that uses, as sensors, the gyroscope sensor 11a, the acceleration sensor 11b, and the magnetic sensor 11c has been described. This is not limiting, and the inclination sensor module may include two or more types of sensors among an acceleration sensor, a gyroscope sensor, a magnetic sensor, and a tilt sensor.

Furthermore, the inclination sensor is not limiting, and it may be replaced with a position sensor having two or more types of sensors among an acceleration sensor, a gyroscope sensor, a magnetic sensor, an ultrasonic sensor, an optical sensor, a camera, and a GPS sensor.

Furthermore, the inclination sensor is not limiting, and it may be replaced with a ranging sensor having two or more types of sensors among a radar, an ultrasonic sensor, an optical sensor and a camera.

Furthermore, the inclination sensor is not limiting, and it may be replaced with a soil sensor having two or more types of sensors among a temperature sensor, a humidity sensor, a radiation sensor, a pH sensor, and a camera.

*** Description of Hardware Configuration ***

Lastly, a supplemental description of the hardware configuration of the attack detection device 2 will be provided. The following description also applies to the inclination sensor module 1a.

The processor 23 is a central processing unit (CPU), a digital signal processor (DSP), or the like.

The memory 24 is a random access memory (RAM), a read only memory (ROM), a flash memory, a hard disk drive (HDD), a solid state drive (SDD), or the like.

Each of the sensor data input interface 25, the signal processing intermediate value input interface 26, and the attack determination result output interface 27 is an Inter-Integrated Circuit (I2C) interface, a Serial Peripheral Interface (SPI), an Ethernet (registered trademark) interface, or the like.

The "unit" of each of the signal processing unit 12, the correlation calculation unit 21, and the attack determination unit 22 may be interpreted as a "circuit", "step", "procedure", or "process".

The attack detection device 2 may be realized by an electronic circuit, such as a logic integrated circuit (IC), a gate array (GA), an application specific integrated circuit (ASIC), or a field-programmable gate array (FPGA).

The processor and the above electronic circuit are also collectively referred to as processing circuitry.

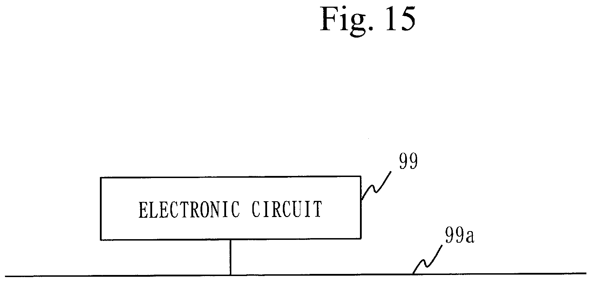

Fig. 15 is a diagram illustrating realization of the attack detection device 2 by an electronic circuit 99. The electronic circuit 99 realizes the functions of the "units" represented as the processor 23, the function of the memory 24, the function of the sensor data input interface 25, the function of the signal processing intermediate value input interface 26, and the function of the attack determination result output interface 27.

The electronic circuit 99 is connected to a signal line 99a. Specifically, the electronic circuit 99 is a single circuit, a composite circuit, a programmed processor, a parallel-programmed processor, a logic IC, a gate array (GA), an application specific integrated circuit (ASIC), or a field-programmable gate array (FPGA).

**Reference** Signs **List**

1: sensor module, 1a: inclination sensor module, 2: attack detection device, 3: controller, 11: sensor data input unit, 11a: gyroscope sensor, 11b: acceleration sensor, 11c: magnetic sensor, 12: signal processing unit, 12a: sensor fusion unit, 13: processor, 14: memory, 15: attack determination result output interface, 16: inclination output interface, 21: correlation calculation unit, 22: attack determination unit, 23: processor, 24: memory, 25: sensor data input interface, 26: signal processing intermediate value input interface, 27: attack determination result output interface, 30: attack detection system, 99: electronic circuit, 99a: signal line, 220: threshold value counter

**Claims**

1. An attack detection device (2) comprising:

   an intermediate value acquisition unit (22) configured to acquire respective intermediate values of a plurality of physical quantities during execution of a sensor fusion algorithm that calculates an output by combining the plurality of physical quantities observed by a plurality of sensors of different types, the sensor fusion algorithm calculating the respective intermediate values of the plurality of physical quantities, and changing the output using the respective intermediate values; and

a determination unit (22) configured to determine whether there is an attack on at least one sensor of the plurality of sensors by comparing each of the respective intermediate values with an intermediate-value threshold value, which is a threshold value;

wherein the respective intermediate values are respective error data of the plurality of physical quantities observed by the plurality of sensors of different types; wherein the device further comprises

a similarity calculation unit (21) configured to acquire sensor data of two sensors of the plurality of sensors, and calculate a similarity between two sets of sensor data,

wherein the determination unit (22) is adapted to determine whether there is an attack on at least one sensor of the plurality of sensors by comparing a similarity threshold value, which is a threshold value, with the similarity.

2. The attack detection device (2) according to claim 1,
wherein types of physical quantities that can be observed by the two sensors are different from each other.

3. The attack detection device (2) according to claim 1 or claim 2,
wherein the similarity calculation unit (21) is adapted to calculate a correlation value as the similarity.

4. The attack detection device (2) according to claim 1,
wherein the determination unit (22) is adapted to weight the intermediate-value threshold value, depending on a type of each of the intermediate values, and to weight the similarity threshold value, depending on types of the two sets of sensor data.

5. An attack detection program for causing a computer to execute:

a process of acquiring respective intermediate values of a plurality of physical quantities during execution of a sensor fusion algorithm that calculates an output by combining the plurality of physical quantities observed by a plurality of sensors of different types, the sensor fusion algorithm calculating the respective intermediate values of the plurality of physical quantities, and changing the output using the respective intermediate values; and

a process of determining whether there is an attack on at least one sensor of the plurality of sensors by comparing each of the respective intermediate values with an intermediate-value threshold value, which is a threshold value;

wherein the respective intermediate values are respective error data of the plurality of physical quantities observed by the plurality of sensors of different types;

wherein the program further causes the computer to execute a process of acquiring sensor data of two sensors of the plurality of sensors, and a process of calculating a similarity between two sets of sensor data,

wherein the process of determining whether there is an attack on at least one sensor of the plurality of sensors is performed by comparing a similarity threshold value, which is a threshold value, with the similarity.

6. An attack detection method comprising:

acquiring respective intermediate values of a plurality of physical quantities during execution of a sensor fusion algorithm that calculates an output by combining the plurality of physical quantities observed by a plurality of sensors of different types, the sensor fusion algorithm calculating the respective intermediate values of the plurality of physical quantities, and changing the output using the respective intermediate values; and

determining whether there is an attack on at least one sensor of the plurality of sensors by comparing each of the respective intermediate values with an intermediate-value threshold value, which is a threshold value, by a computer;

wherein the respective intermediate values are respective error data of the plurality of physical quantities observed by the plurality of sensors of different types;

wherein the method further comprises acquiring sensor data of two sensors of the plurality of sensors, and calculating a similarity between two sets of sensor data,

wherein the step of determining whether there is an attack on at least one sensor of the plurality of sensors is performed by comparing a similarity threshold value, which is a threshold value, with the similarity.

**Patentansprüche**

1. Angriffsdetektionseinrichtung (2), umfassend:

eine Zwischenwert-Erwerbungseinheit (22), die eingerichtet ist, jeweilige Zwischenwerte einer Vielzahl von physikalischen Größen während Ausführung eines Sensorfusionsalgorithmus, der eine Ausgabe durch Kombinieren der Vielzahl von physikalischen Größen, die von einer Vielzahl von Sensoren unterschiedlicher Typen beobachtet werden, berechnet, zu erwerben, wobei der Sensorfusionsalgorithmus die jeweiligen Zwischenwerte der Vielzahl von physikalischen Größen berechnet und die Ausgabe unter Verwendung der jeweiligen Zwischenwerte ändert; und

eine Bestimmungseinheit (22), die eingerichtet ist, zu bestimmen, ob es einen Angriff auf mindestens einen Sensor der Vielzahl von Sensoren gibt, durch Vergleichen jedes der jeweiligen Zwischenwerte mit einem Zwischenwert-Schwellenwert, der ein Schwellenwert ist;

wobei die jeweiligen Zwischenwerte jeweilige Fehlerdaten der Vielzahl von physikalischen Größen sind, die durch die Vielzahl von Sensoren unterschiedlicher Typen beobachtet werden; wobei die Einrichtung ferner umfasst:

eine Ähnlichkeitsberechnungseinheit (21), die eingerichtet ist, Sensordaten von zwei Sensoren der Vielzahl von Sensoren zu erwerben und eine Ähnlichkeit zwischen zwei Gruppen von Sensordaten zu berechnen, wobei die Bestimmungseinheit (22) ausgelegt ist, zu bestimmen, ob es einen Angriff auf mindestens einen Sensor der Vielzahl von Sensoren gibt, durch Vergleichen eines Ähnlichkeitsschwellenwerts, der ein Schwellenwert ist, mit der Ähnlichkeit.

2. Angriffsdetektionseinrichtung (2) nach Anspruch 1,
wobei sich Typen physikalischer Größen, die von den zwei Sensoren beobachtet werden können, voneinander unterscheiden.

3. Angriffsdetektionseinrichtung (2) nach Anspruch 1 oder Anspruch 2,
wobei die Ähnlichkeitsberechnungseinheit (21) ausgelegt ist, einen Korrelationswert als die Ähnlichkeit zu berechnen.

4. Angriffsdetektionseinrichtung (2) nach Anspruch 1,
wobei die Bestimmungseinheit (22) ausgelegt ist, den Zwischenwert-Schwellenwert in Abhängigkeit von einem Typ jedes der Zwischenwerte zu gewichten und den Ähnlichkeitsschwellenwert in Abhängigkeit von Typen der zwei Gruppen von Sensordaten zu gewichten.

5. Angriffsdetektionsprogramm, um einen Computer zu veranlassen, auszuführen:

einen Prozess des Erwerbens jeweiliger Zwischenwerte einer Vielzahl von physikalischen Größen während Ausführung eines Sensorfusionsalgorithmus, der eine Ausgabe durch Kombinieren der Vielzahl von physikalischen Größen, die von einer Vielzahl von Sensoren unterschiedlicher Typen beobachtet werden, berechnet, wobei der Sensorfusionsalgorithmus die jeweiligen Zwischenwerte der Vielzahl von physikalischen Größen berechnet und die Ausgabe unter Verwendung der jeweiligen Zwischenwerte ändert; und

einen Prozess des Bestimmens, ob es einen Angriff auf mindestens einen Sensor der Vielzahl von Sensoren gibt, durch Vergleichen jedes der jeweiligen Zwischenwerte mit einem Zwischenwert-Schwellenwert, der ein Schwellenwert ist;

wobei die jeweiligen Zwischenwerte jeweilige Fehlerdaten der Vielzahl von physikalischen Größen sind, die von der Vielzahl von Sensoren unterschiedlicher Typen beobachtet werden;

wobei das Programm ferner den Computer veranlasst, einen Prozess des Erwerbens von Sensordaten von zwei Sensoren der Vielzahl von Sensoren und einen Prozess des Berechnens einer Ähnlichkeit zwischen zwei Gruppen von Sensordaten auszuführen,

wobei der Prozess des Bestimmens, ob es einen Angriff auf mindestens einen Sensor der Vielzahl von Sensoren gibt, durch Vergleichen eines Ähnlichkeitsschwellenwertes, der ein Schwellenwert ist, mit der Ähnlichkeit durchgeführt wird.

6. Angriffsdetektionsverfahren, umfassend:

Erwerben jeweiliger Zwischenwerte einer Vielzahl von physikalischen Größen während Ausführung eines Sensorfusionsalgorithmus, der eine Ausgabe durch Kombinieren der Vielzahl von physikalischen Größen, die von einer Vielzahl von Sensoren unterschiedlicher Typen beobachtet werden, berechnet wobei der Sensorfusionsalgorithmus die jeweiligen Zwischenwerte der Vielzahl von physikalischen Größen berechnet und die Ausgabe unter Verwendung der jeweiligen Zwischenwerte ändert; und

Bestimmen, ob es einen Angriff auf mindestens einen Sensor der Vielzahl von Sensoren gibt, durch Vergleichen der jeweiligen Zwischenwerte mit einem Zwischenwert-Schwellenwert, der ein Schwellenwert ist, durch einen Computer;

wobei die jeweiligen Zwischenwerte jeweilige Fehlerdaten der Vielzahl von physikalischen Größen sind, die von der Vielzahl von Sensoren unterschiedlicher Typen beobachtet werden;

wobei das Verfahren ferner Erwerben von Sensordaten von zwei Sensoren der Vielzahl von Sensoren und Berechnen einer Ähnlichkeit zwischen zwei Gruppen von Sensordaten umfasst,

wobei der Schritt des Bestimmens, ob es einen Angriff auf mindestens einen Sensor der Vielzahl von Sensoren gibt, durch Vergleichen eines Ähnlichkeitsschwellenwertes, der ein Schwellenwert ist, mit der Ähnlichkeit durchgeführt wird.

## Revendications

1. Dispositif de détection d'attaque (2) comprenant :

   une unité d'acquisition de valeur intermédiaire (22), configurée pour acquérir des valeurs intermédiaires respectives d'une pluralité de quantités physiques pendant l'exécution d'un algorithme de fusion de capteur qui calcule une sortie en combinant la pluralité de quantités physiques observées par une pluralité de capteurs de différents types, l'algorithme de fusion de capteur calculant les valeurs intermédiaires respectives de la pluralité de quantités physiques, et modifiant la sortie en utilisant les valeurs intermédiaires respectives ; et
   une unité de détermination (22) configurée pour déterminer s'il y a une attaque sur au moins un capteur de la pluralité de capteurs, en comparant chacune des valeurs intermédiaires respectives à une valeur de seuil de valeur intermédiaire, qui est une valeur de seuil ;
   dans lequel les valeurs intermédiaires respectives sont des données d'erreurs respectives de la pluralité de quantités physiques observées par la pluralité de capteurs de différents types ; dans lequel le dispositif comprend en outre
   une unité de calcul de similitude (21), configurée pour acquérir des données de capteur de deux capteurs de la pluralité de capteurs, et pour calculer une similitude entre deux ensembles de données de capteur,
   dans lequel l'unité de détermination (22) est adaptée pour déterminer s'il y a une attaque sur au moins un capteur de la pluralité de capteurs, en comparant une valeur de seuil de similitude, qui est une valeur de seuil, à la similitude.

2. Dispositif de détection d'attaque (2) selon la revendication 1,
   dans lequel les types des quantités physiques que peuvent observer les deux capteurs, sont différents les uns des autres.

3. Dispositif de détection d'attaque (2) selon la revendication 1 ou la revendication 2,
   dans lequel l'unité de calcul de similitude (21) est adaptée pour calculer une valeur de corrélation en tant que similitude.

4. Dispositif de détection d'attaque (2) selon la revendication 1,
   dans lequel l'unité de détermination (22) est adaptée pour pondérer la valeur de seuil de valeur intermédiaire, selon un type de chacune des valeurs intermédiaires, et pour pondérer la valeur de seuil de similitude, selon des types des deux ensembles de données de capteur.

5. Programme de détection d'attaque destiné à faire exécuter par un ordinateur :

   un processus destiné à acquérir des valeurs intermédiaires respectives d'une pluralité de quantités physiques pendant l'exécution d'un algorithme de fusion de capteur qui calcule une sortie en combinant la pluralité de quantités physiques observées par une pluralité de capteurs de différents types, l'algorithme de fusion de capteur calculant les valeurs intermédiaires respectives de la pluralité de quantités physiques, et modifiant la sortie en utilisant les valeurs intermédiaires respectives ; et
   un processus destiné à déterminer s'il y a une attaque sur au moins un capteur de la pluralité de capteurs, en comparant chacune des valeurs intermédiaires respectives à une valeur de seuil de valeur intermédiaire, qui est une valeur de seuil ;
   dans lequel les valeurs intermédiaires respectives sont des données d'erreurs respectives de la pluralité de quantités physiques observées par la pluralité de capteurs de différents types ;

dans lequel le programme fait exécuter en outre par l'ordinateur un processus destiné à acquérir des données de capteur de deux capteurs de la pluralité de capteurs, et un processus destiné à calculer une similitude entre deux ensembles de données de capteur,

dans lequel le processus destiné à déterminer s'il y a une attaque sur au moins un capteur de la pluralité de capteurs, est exécuté en comparant une valeur de seuil de similitude, qui est une valeur de seuil, à la similitude.

6. Procédé de détection d'attaque comprenant les étapes suivantes :

acquérir des valeurs intermédiaires respectives d'une pluralité de quantités physiques pendant l'exécution d'un algorithme de fusion de capteur qui calcule une sortie en combinant la pluralité de quantités physiques observées par une pluralité de capteurs de différents types, l'algorithme de fusion de capteur calculant les valeurs intermédiaires respectives de la pluralité de quantités physiques, et modifiant la sortie en utilisant les valeurs intermédiaires respectives ; et

déterminer s'il y a une attaque sur au moins un capteur de la pluralité de capteurs, en comparant chacune des valeurs intermédiaires respectives à une valeur de seuil de valeur intermédiaire, qui est une valeur de seuil, par un ordinateur;

dans lequel les valeurs intermédiaires respectives sont des données d'erreurs respectives de la pluralité de quantités physiques observées par la pluralité de capteurs de différents types ;

dans lequel le procédé comprend en outre les étapes consistant à acquérir des données de capteur de deux capteurs de la pluralité de capteurs, et à calculer une similitude entre deux ensembles de données de capteur,

dans lequel l'étape consistant à déterminer s'il y a une attaque sur au moins un capteur de la pluralité de capteurs, est exécuté en comparant une valeur de seuil de similitude, qui est une valeur de seuil, à la similitude.

# Fig.1

SENSOR MODULE _1_

SENSOR DATA INPUT UNIT _11_ _11_ _11_

SENSOR DATA

SIGNAL PROCESSING UNIT _12_

SIGNAL PROCESSING RESULT

SENSOR DATA

SIGNAL PROCESSING INTERMEDIATE VALUE

CONTROLLER _3_

_30_

CORRELATION CALCULATION UNIT _21_

CORRELATION VALUE

ATTACK DETERMINATION UNIT _22_

THRESHOLD VALUE COUNTER _220_

_2_

ATTACK DETECTION DEVICE

DETERMINATION RESULT (NORMAL or ABNORMAL)

EP 3 767 246 B1

Fig. 2

INCLINATION SENSOR MODULE — 1a

GYROSCOPE SENSOR — 11a

ACCELERATION SENSOR — 11b

MAGNETIC SENSOR — 11c

ANGULAR VELOCITY DATA

ACCELERATION DATA

MAGNETIC DATA

SENSOR FUSION UNIT — 12a

INCLINATION DATA

GRAVITY VECTOR ERROR AND GEOMAGNETIC VECTOR ERROR

SENSOR DATA

CONTROLLER — 3

CORRELATION CALCULATION UNIT — 21

ATTACK DETERMINATION UNIT — 22

THRESHOLD VALUE COUNTER — 220

CORRELATION VALUE

ATTACK DETECTION DEVICE — 2

DETERMINATION RESULT (NORMAL or ABNORMAL)

# Fig. 3

ATTACK DETECTION DEVICE 2

PROCESSOR 23

CORRELATION CALCULATION UNIT 21

ATTACK DETERMINATION UNIT 22

THRESHOLD VALUE COUNTER 220

MEMORY 24

SENSOR DATA INPUT INTERFACE 25

SIGNAL PROCESSING INTERMEDITE VALUE INPUT INTERFACE 26

ATTACK DETERMINATION RESULT OUTPUT INTERFACE 27

EP 3 767 246 B1

# Fig. 4

EP 3 767 246 B1

## Fig. 5

## Fig. 6

Fig.7

Fig. 8

# Fig. 9

ACCELERATION SENSOR $(G_k)$

MAGNETIC SENSOR $(B_k)$

GYROSCOPE SENSOR $(Y_k)$

S301 (1) 6DOF

S302 (2) A PRIORI ESTIMATE

$Q_{v,k}$

$m_k{}^{6DOF}$ | $g_k{}^{6DOF}$

$q_{k-}$

$m_k{}^-$ | $g_k{}^-$

S303 (3) ERROR

$q_{zm\,\varepsilon,k}$ | $q_{zg\,\varepsilon,k}$

S305 (5) A POSTERIORI ESTIMATE

S304 (4) KALMAN FILTER | $Q_{w,k}$

$q_{m\,\varepsilon,k}{}^+$ | $q_{g\,\varepsilon,k}{}^+$ | $b_{\varepsilon',\,k}{}^+$

$m_k{}^+$ | $g_k{}^+$

$q_k{}^+$

ROLL $(\varphi_k)$ | PITCH $(\theta_k)$ | YAW $(\psi_k)$

EP 3 767 246 B1

Fig.10

Fig. 11

EP 3 767 246 B1

# Fig.12

GYROSCOPE SENSOR 11a | ACCELERATION SENSOR 11b | GEOMAGNETIC SENSOR 11c | SENSOR FUSION UNIT 12a | CONTROLLER 3 | CORRELATION CALCULATION UNIT 21 | ATTACK DETERMINATION UNIT 22

ANGULAR VELOCITY DATA

S11

ACCELERATION DATA

S12

MAGNETIC DATA

S13

ACCELERATION DATA
MAGNETIC DATA

S14

S16

SIGNAL PROCESSING INTERMEDIATE VALUES

S15

CORRELATION VALUE

INCLINATION DATA

DETERMINATION RESULT

S17

EP 3 767 246 B1

# Fig. 13

OPERATION OF CORRELATION CALCULATION UNIT 21

```
            ┌────────────────────────┐
            │        START           │
            └────────────────────────┘
                       │
   ┌──────────────────────────────────────┐
   │  RECEIVE ACCELERATION DATA AND        │ ⟋ S101
   │         MAGNETIC DATA                 │
   └──────────────────────────────────────┘
                       │
   ┌──────────────────────────────────────┐
   │ CALCULATE CORRELATION VALUE BETWEEN   │ ⟋ S102
   │ ACCELERATION DATA AND MAGNETIC DATA   │
   └──────────────────────────────────────┘
                       │
   ┌──────────────────────────────────────┐
   │     TRANSMIT CORRELATION VALUE        │ ⟋ S103
   └──────────────────────────────────────┘
```

EP 3 767 246 B1

## Fig. 14

OPERATION OF ATTACK DETERMINATION UNIT 22

```
            START

INITIALIZE THRESHOLD      S201        RECEIVE SENSOR FUSION      S205
VALUE COUNTER                         ERROR DATA
                                      (2 TYPES × 3 AXES)

RECEIVE CORRELATION VALUES S202       DOES EACH                  S206
(3 AXES)                              ERROR EXCEED THRESHOLD     NO
                                      VALUE?
                                                YES              S207
DOES EACH                  S203
CORRELATION VALUE          NO         INCREMENT THRESHOLD
EXCEEDS THRESHOLD                     VALUE COUNTER
VALUE ?
        YES                S204       DOES                       S208
                                      THRESHOLD VALUE COUNTER    NO
INCREMENT THRESHOLD                   EXCEED THRESHOLD
VALUE COUNTER                         VALUE?
                                                YES              S209

                              TRANSMIT DETERMINATION      TRANSMIT DETERMINATION
                              RESULT AS ABNOMAL           RESULT AS NORMAL
                              (ATTACK PRESENT)            (NO ATTACK)
                                                  S210
```

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3239884 A1
- US 2017264629 A1
- WO 2018055748 A1

**Non-patent literature cited in the description**

- **DANIEL ROETENBERG ; HENK J LUINGE ; CHRIS TM BATEN ; PETER H VELTINK.** Compensation of magnetic disturbances improves inertial and magnetic sensing of human body segment orientation. *IEEE Transactions on neural systems and rehabilitation engineering,* 2005, vol. 3 (2005), 395-405
- AN5023 - Sensor Fusion Kalman Filters. *XP Semiconductors,* 2016
- **SON, YUNMOK et al.** Rocking drones with intentional sound noise on gyroscopic sensors. *24th USENIX Security Symposium (USENIX Security 15),* 2015
- **TIMOTHY TRIPPEL ; OFIR WEISSE ; WENYUAN XU ; PETER HONEYMAN ; KEVIN FU.** WALNUT: Waging doubt on the integrity of mems accelerometers with acoustic injection attacks. In Security and Privacy (EuroS&P). *2017 IEEE European Symposium on. IEEE,* 2017, 3-18
- A Security Evaluation of Attack Resilience of Sensor Fusion. **NASHIMOTO, SUZUKI et al.** SCIS2018 2018 Symposium on Cryptography and Information Security Niigata, Japan. The Institute of Electronics, Information and Communication Engineers, 23 January 2018